# EUROPEAN PATENT APPLICATION

(11) **EP 2 728 395 A1**
(43) Date of publication of application: **07.05.2014**
(21) Application number: 13188966.9
(22) Date of filing: 16.10.2013
(51) Int. Cl.: G02B 27/01

(54) **Heads-up display system**

(30) Priority: 31.10.2012 US 201213664695
(71) Applicant: Delphi Technologies, Inc., Troy MI 48007 (US)
(72) Inventor: Lambert, David K., Sterling Heights, MI Michigan 48310 (US); Stark, Kris R., Carmel, IN Indiana 46033 (US); Sylvester, Gail M., Frankenmuth, MI Michigan 48734 (US)
(74) Representative: Robert, Vincent

(57) **Abstract**

An image reflector assembly (22) comprises:
a faceted reflector (32) configured to overlay a dashboard (26) area of a vehicle (12) and define an array of reflective facets (34), wherein each facet is configured to reflect cooperatively a portion of a projected image (20) from a projector (18) to form a reflected image (24) directed toward a windshield (14) of the vehicle (12);
a light diffusive layer (36) configured to diffuse the reflected portion of the projected image (20) such that the reflected image (24) can be seen by an occupant (16) of the vehicle (12) as a reflection in the windshield (14); and
a light control film (38) interposed between the windshield (14) and the faceted reflector (32), said film (38) configured to propagate preferentially the projected image (20).

## Description

### TECHNICAL FIELD

The invention generally relates to heads-up displays for motor vehicles, and more particularly relates to a heads-up display configured to display an image as a reflection in a vehicle window.

### BACKGROUND OF INVENTION

There is a desire to display graphical information to a vehicle occupant, particularly the driver, which can be seen in a large portion of a vehicle window such as a front windshield of the vehicle. The graphical information may be configured to enhance the occupant's response to the outside scene. Potential uses include outlining important signs, helping the occupant to notice pedestrians, and showing road boundaries. Such applications are sometimes referred to as augmented reality.

Potential uses for such a wide-area heads-up display for vehicle navigation were identified by Swedish researchers Martin Johansson and Marten Pettersson in an occupational study of delivery truck drivers "Eyes on the Road - Augmenting Traffic Information," published in Proceedings of DARE 2000 on Designing Augmented Reality Environments, April 2000, pp. 147-148, (Association for Computing Machinery). Without proposing an implementation, Johansson and Pettersson found that the delivery truck driver's job would be simplified by adding visual hints to the scene viewed by the driver through the windshield.

### SUMMARY OF THE INVENTION

In accordance with one embodiment of this invention, a heads-up display system suitable for use in a vehicle is provided. The system includes a projector, a faceted reflector, a light diffusive layer and a light control film. The projector is configured to project a projected image. The faceted reflector is configured to overlay a dashboard area of the vehicle and define an array of reflective facets. Each facet is configured to reflect cooperatively a portion of the projected image to form a reflected image directed toward a windshield of the vehicle. The light diffusive layer is configured to diffuse the reflected portion of the projected image such that the reflected image can be seen by an occupant of the vehicle as a reflection in the windshield. The light control film is interposed between the windshield and the faceted reflector, and is configured to propagate preferentially the projected image.

In another embodiment of the present invention, an image reflector assembly for a heads-up display system is provided. The image reflector assembly includes a faceted reflector, a light diffusive layer, and a light control film. The faceted reflector is configured to overlay a dashboard area of a vehicle and define an array of reflective facets. Each facet is configured to reflect cooperatively a portion of the projected image from a projector to form a reflected image directed toward a windshield of the vehicle. The light diffusive layer is configured to diffuse the reflected portion of the projected image such that the reflected image can be seen by an occupant of the vehicle as a reflection in the windshield. The light control film is interposed between the windshield and the faceted reflector, and is configured to propagate preferentially the projected image.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of a vehicle equipped with heads-up display system that includes an image reflector assembly, in accordance with one embodiment;

Fig. 2 is side view of the system of Fig. 1, in accordance with one embodiment;

Fig. 3 is a side view of the image reflector assembly of Fig. 1, in accordance with one embodiment;

Fig. 4 is a side view of the image reflector assembly of Fig. 1, in accordance with one embodiment; and

Fig. 5 is a perspective view of a faceted reflector that is part of the image reflector assembly of Fig. 1, in accordance with one embodiment.

### DESCRIPTION OF THE PREFERED EMBODIMENT

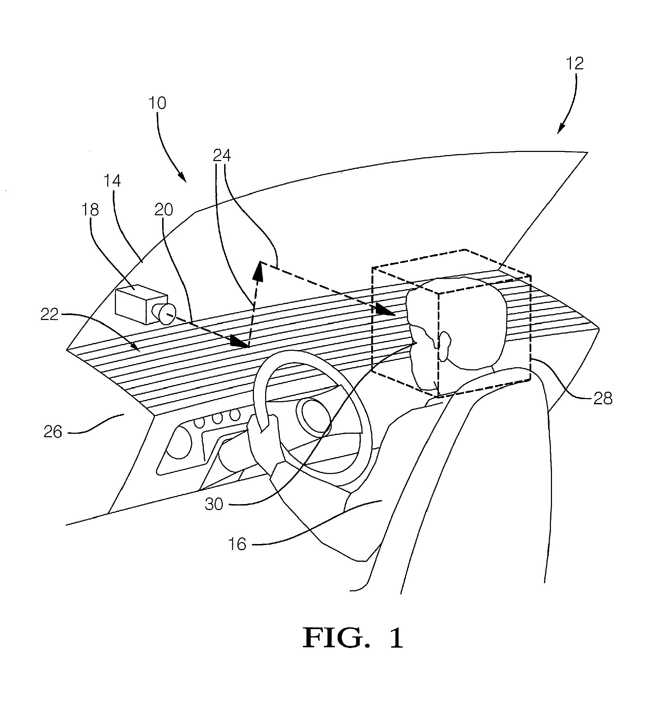

Fig. 1 illustrates a non-limiting example of a heads-up display system, hereafter the system 10, suitable for use in a vehicle 12. In general, the system 10 is configured to display an image reflected by a window of the vehicle that can be seen by an occupant 16 of the vehicle. In this non-limiting example, the window is a windshield 14. However, it is recognized that the system 10 described herein could be used to display an image reflected from or by another window of the vehicle, for example a rear window (not shown). Furthermore, it is recognized that the system 10 could be used to display an image reflected by any window, for example a window of a building, or a non-automotive vehicle such as an aircraft or marine craft.

In general, the windshield 14 is a standard vehicle windshield. As used herein, a standard vehicle windshield is a vehicle window constructed of tempered or laminated safety glass without any additional coatings or layers to provide polarization, diffuse scattering, fluorescence, a wedge angle between the two exterior surfaces, or other features not typically provided by a vehicle window. As such, any heads-up display system that relies on any special coating or layer on the vehicle window is specifically excluded and so is not comparable to the windshield 14 described herein.

The system includes a projector 18 configured to project a projected image 20, illustrated in this example as a light beam. By way of example and not limitation, the projector 18 may be a scanning laser projector such as a pico-projector from Microvision Inc., located in Redmond, Washington. As such, it should be understood that the light beam would move about (i.e. scan) and vary in intensity in a manner effective to project or generate the projected image 20 corresponding to an array of light beams having varying direction, intensity, and possibly color in order to form a viewable image that can be seen by the occupant 16. While only one projector is illustrated, a system with multiple projectors is contemplated. Furthermore, it should be understood, that while a laser has been used in the description of the embodiments, laser light is not essential to the concept. Any source of visible light can be used that is capable of creating a localized image on the dashboard 26 with sufficient brightness and resolution.

The system 10 also includes an image reflector assembly, hereafter the assembly 22. In general, the assembly 22 is configured to provide an area on the dashboard 26 of the vehicle that localizes the projected image 20 and reflects the reflected image 24 toward the windshield 14. The reflected image 24 reflects off the windshield 14 and toward the occupant 16. It should be appreciated that the projector 18 is configured to project the projected image 20 onto the assembly 22 by scanning and/or focusing the projected image 20 thereon. Preferably, the assembly 22 restricts the light seen as the reflected image 24 into a head box 28 so that the intensity of light output by the projector 18 is not scattered undesirably to not be seen by the driver, thereby reducing the light power requirements of the projector 18. A reduction in the light power needed helps to ensure that the projected power does not exceed a safety limit, thus helping to prevent damage to an eye 30 of the occupant 16 if the projected image 20 (e.g. a laser beam) is inadvertently reflected directly into the eye 30 instead of being reflected by the assembly 22.

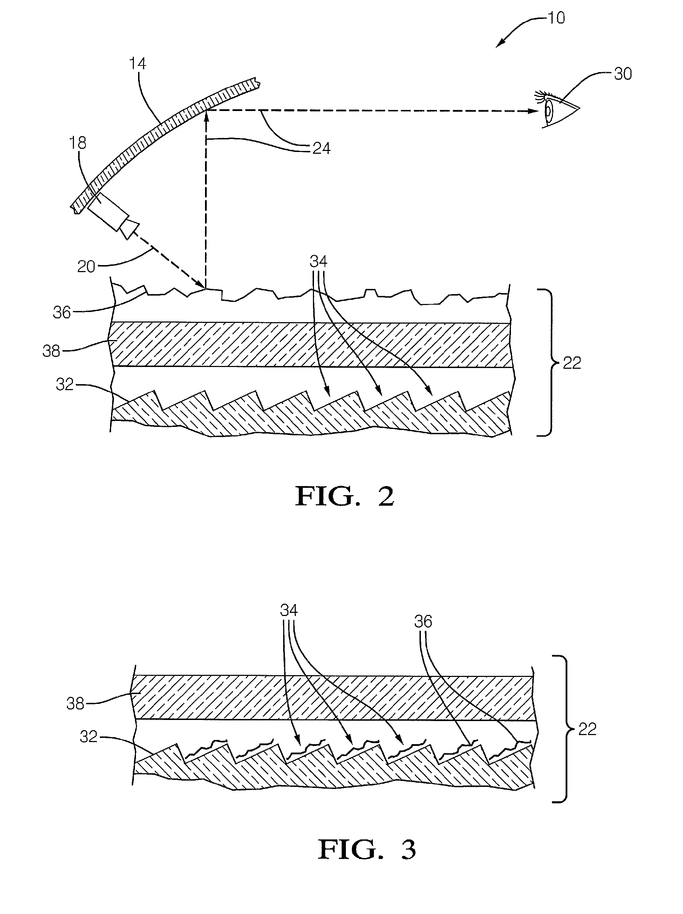

Figs. 2-4 illustrate various non-limiting examples of the assembly 22. The assembly 22, or the system 10, includes a faceted reflector 32 configured to overlay a dashboard area, for example, the dashboard 26 of the vehicle 12. In general, a faceted reflector is a device configured to reflect light in a direction other than the direction that would be expected if the faceted reflector 32 as a whole were replaced by a simple mirror. In other words, if the faceted reflector 32 is characterized as generally defining a plane corresponding to the plane of the dashboard 26, light impinging on the faceted reflector 32 is reflected at an angle other than an incidence angle of the impinging light. As suggested in the non-limiting example illustrated in Fig. 1, the projected image 20 is projected from the side of the windshield 14, for example from an A-pillar of the vehicle 12. However, the reflected image 24 is directed by the assembly 22 in a generally vertical direction toward the windshield 14, a direction other than what would be the case if the dashboard 26 were broadly overlaid by a smooth mirror surface.

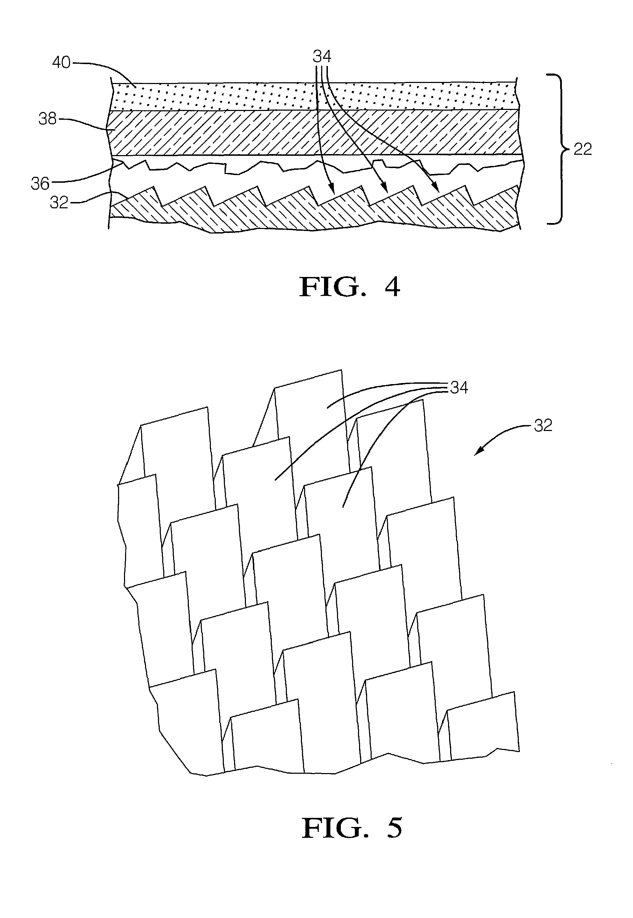

Fig. 5 illustrates a non-limiting example of the faceted reflector 32. In general, the faceted reflector 32 defines an array of reflective facets 34. Each facet of the array of reflective facets 34 is configured to reflect a portion of the projected image 20, and so cooperate to form the reflected image 24 that is directed toward the windshield 14 of the vehicle 12, and generally not at an angle that corresponds to conventional reflection from a smooth reflector in the plane of the dashboard 26. Preferably, each of the reflected facets 34 is small enough so that the pixelization effect caused by the array of the reflected facets 34 is not objectionable to the occupant 16.

In one exemplary embodiment, each of the reflected facets 34 is generally a flat surface. The orientation of a particular facet may be characterized by defining a normal unit-length direction vector perpendicular or normal to the surface of the particular facet. The direction of this normal vector can be determined as an average of a projected unit-length direction vector corresponding to the direction of the projected image 20 at the facet location, and a reflected unit-length direction vector corresponding to the direction of the reflected image 24 at the facet location.

A computer program was developed using the MATLAB programming language that determines the projected vector and the reflected vector associated with projected image 20 and reflected image 24, respectively, according to this prescription. The projected vector and the reflected vector are then averaged to determine the orientation of each of the reflected facets 34 that makes up the faceted reflector 32. The output data from the computer program, a list of unit-length orientation vectors, was used to specify three distinct points on the surface of each facet. The array of points was used to create a computer aided design model of a faceted reflector using Unigraphics MX7.5. A subsequent ray-tracing investigation using the ray-tracing program Light Tools 7.3 showed that the faceted reflector 32 successfully directs rays from the projector 18 to the windshield 14, so each respective ray is reflected from the windshield 14 to the viewer's eye 30, or within the head box 28. The surface upon which the reflected facets 34 are arrayed could be, for example, a smooth three-dimensional surface that conforms to the shape of a particular automobile dashboard design, i.e. the dashboard 26.

By way of example and not limitation, a prototype faceted reflector was fabricated where each of the reflected facets 34 was approximately five millimeters (5mm) by six millimeters (6mm). An underlying structure of the prototype was formed using stereo-lithography, and then individual 5mm x 6mm planar reflectors were adhesively attached to form the array of reflective facets 34. The planar reflectors were fabricated from material purchased from Luminit Corp. of Torrance, California. The material is generally characterized as transparent polycarbonate film with a light shaping diffuser pattern on one side, and a smooth metalized reflective coating on the opposite side. The metalized coating was covered with an adhesive and a die was used to cut the material into shapes of the appropriate size, which were then affixed to the flat surfaces (facets) of the prototype. The material was part number S3PI-12 having a three-degree (3°) light shaping diffuser angle. As such, almost all of the light from the projector 18 is reflected toward the head box 28, as opposed to being diffused over a wide angle (e.g. 180 degrees).

Light incident on a flat area of the film reflects in the specular direction with a broadened angular distribution of about 3°. As reflected from faceted reflector 32, the pixel effect was noticeable, but not regarded as objectionable. It is anticipated that known production methods (e.g. injection molding and vapor film deposition) will be used to form a faceted reflector that has smaller reflected facets, for example one millimeter (1mm) square facets. It is recognized that the faceted reflector 32 may be integrated with the dashboard 26 as part of a unified manufacturing process. The faceted reflector 32 is described herein as a separate part only for simplifying the explanation. It is recognized that if the system employs multiple projectors, that the faceted reflector 32 may be readily reconfigured to accommodate the multiple projectors.

The assembly 22, or the system 10, may also include a light diffusive layer 36 configured to diffuse the reflected portion of the projected image 20 such that the reflected image 24 can be seen by the occupant 16 of the vehicle 12 as a reflection in the windshield 14. The light diffusive layer 36 may be similar to the light shaping diffuser material with part number S3PI-12, as described above. Fig. 2 illustrates the light diffusive layer 36 as the top layer of the assembly 22. Alternatively, the light diffusive layer 36 may overlay each of the reflected facets 34 as illustrated in Fig. 3, or the light diffusive layer 36 may be interposed between the faceted reflector 32 and other layers of the assembly 22 as illustrated in Fig. 4. The light diffusive layer 36 (i.e. a light shaping texture similar to an anti-glare coating applied to flat panel displays) is generally provided so that the light reflected by the faceted reflector 32 is seen as a 'virtual' image that appears to be outside the windshield 14. This may appear as if the surface of the assembly 22 were viewed in a mirror coating on the inside of the windshield. Alternately, the reflective facets 34 may be constructed of a glossy plastic. Then, the faceted reflector 32 may be molded into a surface of the dashboard 26 using an injection molding process similar to known manufacturing processes for dashboards.

The system 10 or the assembly 22 may also include a light control film or privacy film, hereafter the film 38. In general, the film 38 is interposed between the windshield 14 and the faceted reflector 32. The film 38 is generally configured to propagate preferentially the projected image 20. In other words, the film 38 is oriented to maximize the propagation intensity of light in the projected image 20 from the projector 18 that passes through the light control film 38 to the faceted reflector 32, and of light in the reflected image 24 passing from the faceted reflected 32 through the light control film 38 to form reflected image 24. As such, the projected image 20 and the reflected image 24 readily propagate through the film 38, while light from directions that do not correspond to the preferential direction of the film are blocked. Including the film 38 into the assembly 22 is advantageous to prevent or reduce unwanted reflections or glare from other light sources such as the sun or artificial lighting from signs and buildings.

Privacy film (i.e. the film 38) is commercially available from 3M Corporation of St. Paul, Minnesota, and is marked as "Advanced Light Control Film." The film 38 may be characterized as being similar to a venetian blind embedded in a plastic film. The surfaces of the individual slats that form the venetian blind may be coated with a material that absorbs visible light. Preferably, the slats are spaced close enough together to not be noticeable to the unaided eye. Furthermore, the slats are preferably oriented to be parallel to the plane defined by the vector of the projected image 20 and the vector of the reflected image 24 inside the light control film material (the film 38) to account for the change in direction caused by refraction at the surface of the film 38.

The film 38 may be formed of a plurality of sections so that a preferential propagation direction of each section can be selected based on the direction of the projector 18 relative to the windshield 14. In other words, the film 38 may be a mosaic of film patches, each patch with the appropriate orientation for its location relative to the direction of the projector 18 and the windshield 14. The patches can be two-dimensional shapes that fully cover the surface without gaps between them. Examples of such shapes include equal sized squares and equal sized hexagons. Rectangles (like bricks) are another example. An arrangement of shapes that covers a plane surface is known as a tiling, and several are known to the art.

The faceted reflector 32 may be integrated into a single component that includes the film 38 and light diffusive layer 36. Optical bonding may be used to eliminate reflection from the interfaces between films. In one embodiment, the reflective facets 34 are metalized to be reflective. Other means to obtain a reflective surface are also known. For example, as known to the art, the reflection can be caused by alternating layers of material with different index of refraction. The reflective facets can be an internal surface, separate from the physical bottom surface. Each of the used to form the assembly 22 are commercially available, and can be coupled to each other using known methods and materials such as adhesive bonding or heat/pressure bonding.

Fig. 4 illustrates a non-limiting example of the assembly that includes an anti-reflective layer 40 configured to reduce sunlight reflection from the dashboard 26 proximate to the faceted reflector 32. Glare from the top surface of the assembly 22 is reduced by the anti-reflective layer 40. As pointed out before, the light diffusive layer may be provided by an embossed layer at another surface, such as on the bottom surface of the film 38. As an example, an anti-reflection film available from Sharp reduces surface reflectivity from about 4% to about 0.2%. The top layer is a separate sheet component that includes anti-reflection layer 40, the film 38, and the light diffusing layer 36 on the bottom surface that diffuses transmitted light into the desired range of angles. Preferably, the top film is easily replaced by the user if it becomes marred or damaged.

Accordingly, a heads-up display system (the system 10), and an image reflector assembly (the assembly 22) is provided. The system 10 may be configured to provide a display covering a wide portion of the windshield, thereby enabling a driver to be alerted to conditions without taking his or her eyes off the driving scene. An advantage of the heads-up display system 10 over the prior art heads-up displays is that a standard windshield can be used. There are no polarizers, diffusers, fluorescent materials, or wedges added to the window to cause haze, reduce clarity, or increase cost.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. An image reflector assembly (22) comprising:
a faceted reflector (32) configured to overlay a dashboard (26) area of a vehicle (12) and define an array of reflective facets (34), wherein each facet is configured to reflect cooperatively a portion of a projected image (20) from a projector (18) to form a reflected image (24) directed toward a windshield (14) of the vehicle (12);
a light diffusive layer (36) configured to diffuse the reflected portion of the projected image (20) such that the reflected image (24) can be seen by an occupant (16) of the vehicle (12) as a reflection in the windshield (14); and
a light control film (38) interposed between the windshield (14) and the faceted reflector (32), said film (38) configured to propagate preferentially the projected image (20).

2. Assembly (22) according to claim 1, wherein said light diffusive layer (36) is interposed between the light control film (38) and the windshield (14).

3. Assembly (22) according to claim 1, wherein said light diffusive layer (36) is interposed between the light control film (38) and the faceted reflector (32).

4. Assembly (22) according to claim 3, wherein said light diffusive layer (36) is applied to each facet (34).

5. Assembly (22) according to any of claim 1 to 4, wherein said light control film (38) comprises a plurality of sections and a preferential propagation direction of each section is determined based on the direction of the projector (18) relative to the windshield (14).

6. Assembly (22) according to claim 1 or 3, wherein said assembly (22) includes an anti-reflective layer (40) configured to reduce sunlight reflection from the dashboard (26) area proximate to the faceted reflector (32).

7. A heads-up display system (10) suitable for use in a vehicle (12), said system (10) comprising a projector (18) configured to project a projected image (20) and an image reflector assembly (22) as set in any of the preceding claims.

8. System (10) according to of claim 7, wherein said projector (18) comprises a scanning laser.
